# EUROPÄISCHE PATENTSCHRIFT

(11) **EP 4 326 588 B1**
(45) Veröffentlichungstag und Bekanntmachung des Hinweises auf die Patenterteilung: **12.02.2025**
(21) Anmeldenummer: 22723998.5
(22) Anmeldetag: 19.04.2022
(51) Int. Cl.: B60W 30/12, B60W 50/14, B60W 60/00, B60W 50/08

(54) **FAHRASSISTENZSYSTEM ZUM AUTOMATISIERTEN FAHREN EINES FAHRZEUGS**
DRIVING ASSISTANCE SYSTEM FOR THE AUTOMATED DRIVING OF A VEHICLE
SYSTÈME D'AIDE À LA CONDUITE POUR LA CONDUITE AUTOMATISÉE D'UN VÉHICULE

(30) Priorität: 21.04.2021 DE 102021110090
(43) Veröffentlichungstag der Anmeldung: 28.02.2024
(73) Patentinhaber: Bayerische Motoren Werke Aktiengesellschaft, 80809 München (DE)
(72) Erfinder: NIKOLOV, Ivo, 81245 München (DE)
(86) Internationale Anmeldenummer: PCT/EP2022/060250
(87) Internationale Veröffentlichungsnummer: WO 2022/223521

(56) Entgegenhaltungen:
- EP-A1- 3 115 273
- DE-A1- 102010 009 133
- DE-A1- 102011 055 495
- DE-A1- 102017 208 504
- US-A1- 2021 053 590

## Beschreibung

Die vorliegende Erfindung betrifft ein Fahrassistenzsystem zum automatisierten Fahren eines Fahrzeugs, ein Fahrzeug mit einem solchen Fahrassistenzsystem, ein Fahrassistenzverfahren zum automatisierten Fahren eines Fahrzeugs und ein Speichermedium zum Ausführen des Fahrassistenzverfahrens. Die vorliegende Erfindung betrifft insbesondere ein Umschalten eines Spurhalteassistenten von einem niedrigeren Automatisierungsgrad auf einen höheren Automatisierungsgrad.

### Stand der Technik

Die Entwicklung von Fahrassistenzsystem en beispielsweise zum automatisierten Fahren gewinnt stetig an Bedeutung. Ein beispielhaftes Fahrassistenzsystem ist der Spurhalteassistent. Unter Verwendung einer Kamera überprüft der Spurhalteassistent Fahrspurmarkierungen und vergleicht diese mit der Position des Fahrzeugs in der Fahrspur. Droht das Fahrzeug die Fahrspur unbeabsichtigt zu verlassen, warnt der Spurhalteassistent den Fahrer durch ein optisches, akustisches und/oder haptisches Signal. Setzt der Fahrer jedoch den Blinker, um die Fahrspur zu wechseln oder abzubiegen, greift der Spurhalteassistent nicht in die Lenkung ein.

Neben derartigen Warnungen existieren aktive Spurhalteassistenten. Auch der aktive Spurhalteassistent nutzt das Kamerabild und vergleicht es mit der Position des eigenen Fahrzeugs. Unterschreitet das Fahrzeug einen Mindestabstand zur Fahrbahnbegrenzung, lenkt der Spurhalteassistent das Fahrzeug wieder zurück zur Mitte der Fahrspur. Da der Fahrer auch bei aktiviertem Spurhalteassistenten in der Verantwortung steht, misst der Spurhalteassistent ständig ein am Lenkrad anliegendes Fahrerhandmoment und überprüft, ob sich die Hände des Fahrers noch am Lenkrad befinden. Ist dies nicht der Fall, wird der Fahrer diesbezüglich gewarnt und der Spurhalteassistent deaktiviert.

Wenn der Fahrer den Spurhalteassistenten aktiveren möchte, kann es vorkommen, dass die Aktivierung zum Beispiel bei unsicheren Sensordaten erfolglos ist. In solchen Situationen kann es vorkommen, dass der Fahrer die erfolglose Aktivierung nicht zur Kenntnis nimmt und davon ausgeht, dass der Spurhalteassistent aktiv ist. Hierdurch kann es zu gefährlichen Situationen kommen, beispielsweise wenn der Fahrer unter Annahme eines aktivierten Spurhalteassistenten die Hände vom Lenkrad nimmt.

Die DE 10 2011 055 495 A1 beschreibt ein Verfahren zum Betrieb eines Fahrerassistenzsystems eines Kraftfahrzeugs, wobei bei Vorliegen eines definierten Aktivierungskriteriums eine automatische Aktivierung wenigstens einer Fahrerassistenzfunktion des Fahrerassistenzsystems erfolgt.

In der DE 10 2010 009 133 A1 wird eine Unterstützung für den bestmöglichen Einsatz eines Fahrerassistenzsystems beschrieben. Dabei werden fortlaufend Fahrtdaten mittels einer Fahrzeugsensoreinrichtung erfasst und an eine Systemauswahleinrichtung übermittelt. Diese wählt passende Fahrerassistenzsysteme basierend auf einer Auswertung der Fahrtdaten aus. Die ausgewählten Systeme werden dem Fahrer zur Aktivierung vorgeschlagen.

### Offenbarung der Erfindung

Es ist eine Aufgabe der vorliegenden Erfindung, ein Fahrassistenzsystem zum automatisierten Fahren eines Fahrzeugs, ein Fahrzeug mit einem solchen Fahrassistenzsystem, ein Fahrassistenzverfahren zum automatisierten Fahren eines Fahrzeugs und ein Speichermedium zum Ausführen des Fahrassistenzverfahrens anzugeben, die eine Sicherheit beim automatisierten Fahren verbessern können. Insbesondere ist es eine Aufgabe der vorliegenden Erfindung, eine Aufmerksamkeit eines Fahrers in Bezug auf den Statuts des automatisierten Fahrens sicherzustellen.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Erfindung ist ein Fahrassistenzsystem zum automatisierten Fahren eines Fahrzeugs, insbesondere eines Kraftfahrzeugs, angegeben. Das Fahrassistenzsystem umfasst ein Fahrassistenzmodul, das zum automatisierten Fahren mit einem ersten Automatisierungsgrad und zum automatisierten Fahren mit einem zweiten Automatisierungsgrad eingerichtet ist, wobei der zweite Automatisierungsgrad höher als der erste Automatisierungsgrad ist; ein Ausgabemodul, das zum Ausgeben einer Fahreranweisung eingerichtet ist, wenn während des automatisierten Fahrens mit dem ersten Automatisierungsgrad eine vorgegebene Fahrerhandlung für eine erste Zeitspanne ausbleibt; und eine Benutzereingabemodul, das zum Empfangen einer Benutzereingabe zum Umschalten vom ersten Automatisierungsgrad auf den zweiten Automatisierungsgrad eingerichtet ist. Das Ausgabemodul ist weiter eingerichtet, um die Fahreranweisung auszugeben, wenn folgende Bedingungen vorliegenden:
(i) das Fahrassistenzsystem bestimmt, dass die vorgegebene Fahrerhandlung für eine zweite Zeitspanne ausbleibt, die kürzer als die erste Zeitspanne ist,
(ii) die Benutzereingabe zum Umschalten vom ersten Automatisierungsgrad auf den zweiten Automatisierungsgrad empfangen wird, und
(iii) ein Umschalten vom ersten Automatisierungsgrad auf den zweiten Automatisierungsgrad erfolglos ist.

Erfindungsgemäß wird bei einem Wechsel von einem niedrigeren Automatisierungsgrad zu einem höheren Automatisierungsgrad die Zeitspanne bis zur Ausgabe der Fahreranweisung, wie zum Beispiel eines Hands-on Requests, verkürzt. Wenn der Fahrer bei einem erfolglosen Aktivierungsversuch des höheren Automatisierungsgrads die Hände vom Lenkrad nimmt, erfolgt die entsprechende Fahreranweisung also schneller als normalerweise. Dadurch kann sichergestellt werden, dass der Fahrer die erfolglose Aktivierung des höheren Automatisierungsgrads schnell zur Kenntnis nimmt und entsprechend handelt. Hierdurch können gefährliche Situationen aufgrund einer fehlerhaften Annahme einer aktivierten Fahrassistenzfunktion vermieden werden.

Das Fahrassistenzmodul und/oder das Ausgabemodul und/oder das Benutzereingabemodul können in einem gemeinsamen Software- und/oder Hardware-Modul realisiert sein. Alternativ dazu können das Fahrassistenzmodul und/oder das Ausgabemodul und/oder das Benutzereingabemodul jeweils in getrennten Software- und/oder Hardware-Modulen realisiert sein.

Das Fahrassistenzsystem ist zum automatisierten Fahren eingerichtet. Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012).

Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich.

Die vorstehend genannten vier Automatisierungsgrade entsprechen den SAE-Level 1 bis 4 der Norm SAE J3016 (SAE International - früher Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Vorzugsweise entspricht der erste Automatisierungsgrad dem SAE-Level 2.

SAE-Level 2 entspricht einer Teilautomatisierung der Fahrzeugführung. Bei einer derartigen Teilautomatisierung der Fahrzeugführung werden Funktionen wie automatisches Einparken, Spurhalten, allgemeine Längsführung, Beschleunigen und/oder Abbremsen vom Fahrassistenzsystem übernommen.

Vorzugsweise entspricht der zweite Automatisierungsgrad dem SAE-Level 3.

SAE-Level 3 entspricht einer Bedingungsautomatisierung der Fahrzeugführung. Bei einer derartigen Bedingungsautomatisierung der Fahrzeugführung muss der Fahrer das Fahrassistenzsystem nicht ununterbrochen überwachen. Das Fahrassistenzsystem führt selbstständig Funktionen wie das Auslösen des Blinkers, Spurwechsel und Spurhalten durch. Es muss jedoch sichergestellt sein, dass der Fahrer bei Bedarf innerhalb einer bestimmten Zeit auf eine Aufforderung durch das Fahrassistenzsystem hin die Führung des Fahrzeugs übernehmen kann.

Vorzugsweise ist das Fahrassistenzsystem ein Spurhalteassistent, insbesondere ein aktiver Spurhalteassistent mit Lenkunterstützung. Der aktive Spurhalteassistent unterstützt den Fahrer bei der Querführung des Fahrzeugs z.B. in Bezug auf eine Fahrspur, indem ein Lenkmoment bestimmt und an ein Lenksystem des Fahrzeugs ausgegeben wird. Das Lenkmoment ist ein sogenanntes Rückführmoment, das in das Lenksystem des Fahrzeugs bzw. den entsprechenden Aktuator eingeleitet wird, so dass das Fahrzeug in die Fahrspur zurückgeführt wird. Der wenigstens eine Aktuator kann zudem eingerichtet sein, um ein Unterstützungsmoment bereitzustellen, das den Fahrer beim Aufbringen eines gewünschten (manuellen) Lenkmoments unterstützt.

Das Einstellen des Lenkmoments erfolgt beispielsweise derart, dass eine Stärke des Lenkmoments bestimmt und als Befehl bzw. Anweisung an das Lenksystem des Fahrzeugs ausgegeben wird. Der Ausdruck "Stärke des Lenkmoments" bezieht sich dabei auf eine Größe (bzw. einen Betrag oder eine Intensität) der dem Lenkmoment entsprechenden Kraft, die zum Beispiel durch den wenigstens einen Aktuator des Lenksystems bereitgestellt wird. Die Stärke des Lenkmoments bzw. des Rückführmoments gibt insbesondere an, wie stark die Lenkwirkung durch das Fahrassistenzsystem beeinflusst wird. Die Stärke des Lenkmoments bzw. des Rückführmoments gibt insbesondere eine Intensität des Eingriffs des Fahrassistenzsystems auf das Lenksystem bzw. das Lenkrad an.

Dabei kann das Rückführmoment betragsmäßig so ausgelegt sein, dass das Fahrzeug nicht gegen den Willen des Fahrers in der Fahrspur gehalten wird und es dem Fahrer möglich ist, das Fahrassistenzsystem zu übersteuern. Hierfür legt der Fahrer ein entsprechend großes Handlenkmoment am Lenkrad an, so dass ein Grenzwert überschritten wird, was zu einer Deaktivierung des Fahrassistenzsystems führt.

Vorzugsweise umfasst das Fahrassistenzsystem wenigstens eine Erfassungseinheit, die eingerichtet ist, um wenigstens eine Fahrspur zu erfassen. Basierend auf den Erfassungsdaten der wenigstens einen Erfassungseinheit unterstützt das Fahrassistenzsystem den Fahrer bei der Querführung des Fahrzeugs in Bezug auf die Fahrspur.

Vorzugsweise umfasst (oder ist) die wenigstens eine Erfassungseinheit wenigstens eine Kamera, die eingerichtet ist, um wenigstens eine Fahrspur zu erfassen. Die wenigstens eine Kamera kann zum Beispiel eine hinter einer Windschutzscheibe montierte CMOS-Kamera sein. Aus den erfassten Bildern erkennt das Fahrassistenzsystem Fahrspurmarkierungen und ermittelt einen optimalen Lenkwinkel, um das Fahrzeug in der Mitte der Fahrspur zu halten. Wenn das Fahrzeug die erkannte Fahrspurmitte zu verlassen droht, wird das Rückführmoment an das Lenkrad angelegt.

Vorzugsweise ist die vorgegebene Fahrerhandlung ein Halten eines Lenkrads durch den Fahrer. Beispielsweise bei einem Spurhalteassistenten gemäß SAE-Level 2 muss der Fahrer seine Hände am Lenkrad halten, damit der Fahrer jederzeit die Kontrolle übernehmen kann, wenn sich der Spurhalteassistent abschaltet.

Vorzugsweise ist das Fahrassistenzsystem eingerichtet, um ein am Lenkrad anliegendes Fahrerhandmoment zu erfassen. Basierend auf dem erfassten Fahrerhandmoment kann bestimmt werden, ob die vorgegebene Fahrerhandlung vorhanden ist, insbesondere ob der Fahrer die Hände (vermutlich) nicht am Lenkrad hat und die vorgegebene Fahrerhandlung damit ausbleibt. Insbesondere kann bestimmt werden, dass der Fahrer die Hände (vermutlich) nicht am Lenkrad hat, wenn das erfasste Handmoment kleiner (oder gleich) als eine Schwelle ist. Ähnlich kann bestimmt werden, dass der Fahrer die Hände am Lenkrad hat, wenn das erfasste Handmoment (gleich oder) größer als die Schwelle ist.

Vorzugsweise ist die Fahreranweisung ein Hands-on Request (HOR) oder ein Take-over Request (TOR).

Der Hands-on Request ist eine Aufforderung an den Fahrer, die Hände an das Lenkrad zu legen bzw. das Lenkrad mit den Händen zu greifen. In diesem Fall kann der Spurhalteassistent aktiv sein und die Fahrzeugführung durchführen. Wenn das Fahrassistenzsystem erkennt, dass der Fahrer die Hände nicht am Lenkrad hat, kann der Hands-on Request ausgegeben werden ohne dass der Spurhalteassistent sofort deaktiviert wird.

Der Take-over Request ist eine Aufforderung an den Fahrer, die Fahrzeugführung zu übernehmen. In diesem Fall kann der Spurhalteassistent deaktiviert werden und die Fahrzeugführung an den Fahrer übergeben werden. Wenn beispielsweise eine Unsicherheit bei der Spurerfassung zu groß wird, kann der Take-over Request ausgegeben und der Spurhalteassistent deaktiviert werden.

Vorzugsweise ist das Ausgabemodul eingerichtet, um die Fahreranweisung optisch und/oder akustisch und/oder haptisch auszugeben.

In einigen Ausführungsformen kann das Ausgabemodul wenigstens eine Anzeigevorrichtung umfassen, die eingerichtet ist, um die Fahreranweisung optisch auszugeben bzw. anzuzeigen. Die Anzeigevorrichtung kann zum Beispiel im oder am Armaturenbrett des Fahrzeugs vorgesehen sein. Die Anzeigevorrichtung kann zum Beispiel eine Headunit sein. In einigen Ausführungsformen umfasst die Anzeigevorrichtung ein LCD-Display, ein Plasma-Display oder ein OLED-Display.

Ergänzend oder alternativ kann das Ausgabemodul wenigstens einen Lautsprecher umfassen, der eingerichtet ist, um die Fahreranweisung akustisch auszugeben.

Ergänzend oder alternativ kann das Ausgabemodul eingerichtet sein, um die Fahranweisung haptisch zum Beispiel durch eine Vibration des Lenkrads auszugeben.

Vorzugswiese ist die erste Zeitspanne 5 Sekunden oder mehr, oder 10 Sekunden oder mehr. Beispielsweise kann die erste Zeitspanne im Bereich zwischen 5 und 15 Sekunden sein.

Ergänzend oder alternativ kann die zweite Zeitspanne 4 Sekunden oder weniger sein. Beispielsweise kann die zweite Zeitspanne 1 Sekunde sein.

Die erste Zeitspanne und die zweite Zeitspanne können ausgehend von einem Zeitpunkt definiert sein, an dem das Fahrassistenzsystem bestimmt, dass der Fahrer die Hände (vermutlich) nicht mehr am Lenkrad hat. Der Zeitpunkt kann insbesondere ein Zeitpunkt sein, zu dem das Fahrassistenzsystem bestimmt, dass das erfasste Handmoment kleiner oder gleich als die Schwelle ist.

Das Fahrassistenzmodul umfasst das Benutzereingabemodul, das zum Empfangen der Benutzereingabe zum Umschalten vom ersten Automatisierungsgrad auf den zweiten Automatisierungsgrad eingerichtet ist. Das Benutzereingabemodul kann zum Beispiel im oder am Armaturenbrett des Fahrzeugs vorgesehen sein. Das Benutzereingabemodul kann zum Beispiel eine Headunit sein. In einigen Ausführungsformen umfasst das Benutzereingabemodul wenigstens eine Anzeigevorrichtung, wie zum Beispiel einen Touch-Screen, und/oder wenigstens ein taktiles Bedienelement, wie einen Schalter, eine Taste und/oder einen Drehschalter.

Gemäß einem weiteren Aspekt der vorliegenden Erfindung ist ein Fahrzeug, insbesondere Kraftfahrzeug, angegeben. Das Fahrzeug umfasst das Fahrassistenzsystem zum automatisierten Fahren gemäß den Ausführungsformen der vorliegenden Erfindung.

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Gemäß einem weiteren unabhängigen Aspekt der vorliegenden Erfindung ist ein Fahrassistenzverfahren zum automatisierten Fahren eines Fahrzeugs, insbesondere eines Kraftfahrzeugs, angegeben. Das Fahrassistenzverfahren umfasst ein Ausgeben einer Fahreranweisung, wenn während eines automatisierten Fahrens mit einem ersten Automatisierungsgrad eine vorgegebene Fahrerhandlung für eine erste Zeitspanne ausbleibt; ein Empfangen einer Benutzereingabe zum Umschalten vom ersten Automatisierungsgrad auf einen zweiten Automatisierungsgrad, wobei der zweite Automatisierungsgrad höher als der erste Automatisierungsgrad ist; und ein Ausgeben der Fahreranweisung, wenn:
(i) die vorgegebene Fahrerhandlung für eine zweite Zeitspanne ausbleibt, die kürzer als die erste Zeitspanne ist, und
(ii) ein Umschalten vom ersten Automatisierungsgrad auf den zweiten Automatisierungsgrad erfolglos ist.

Das Fahrassistenzverfahren zum automatisierten Fahren eines Fahrzeugs kann die Aspekte des in diesem Dokument beschriebenen Fahrassistenzsystems zum automatisierten Fahren eines Fahrzeugs implementieren.

Gemäß einem weiteren unabhängigen Aspekt der vorliegenden Erfindung ist ein Software (SW) Programm angegeben. Das SW Programm kann eingerichtet werden, um auf einem oder mehreren Prozessoren ausgeführt zu werden, und um dadurch das in diesem Dokument beschriebene Fahrassistenzverfahren zum automatisierten Fahren eines Fahrzeugs, insbesondere eines Kraftfahrzeugs, auszuführen.

Gemäß einem weiteren unabhängigen Aspekt der vorliegenden Erfindung ist ein Speichermedium angegeben. Das Speichermedium kann ein SW Programm umfassen, welches eingerichtet ist, um auf einem oder mehreren Prozessoren ausgeführt zu werden, und um dadurch das in diesem Dokument beschriebene Fahrassistenzverfahren zum automatisierten Fahren eines Fahrzeugs, insbesondere eines Kraftfahrzeugs, auszuführen.

Gemäß einem weiteren unabhängigen Aspekt der vorliegenden Erfindung ist eine Software mit Programmcode zur Durchführung des Fahrassistenzverfahrens zum automatisierten Fahren eines Fahrzeugs, insbesondere eines Kraftfahrzeugs, auszuführen, wenn die Software auf einer oder mehreren softwaregesteuerten Einrichtungen abläuft.

### Kurze Beschreibung der Zeichnungen

Ausführungsbeispiele der Erfindung sind in den Figuren dargestellt und werden im Folgenden näher beschrieben. Es zeigen:
Figur 1 schematisch ein Fahrzeug mit einem Fahrassistenzsystem zum automatisierten Fahren gemäß Ausführungsformen der vorliegenden Erfindung, und
Figur 2 ein Flussdiagram eines Fahrassistenzverfahrens zum automatisierten Fahren eines Fahrzeugs gemäß Ausführungsformen der vorliegenden Erfindung.

### Ausführungsformen der Erfindung

Im Folgenden werden, sofern nicht anders vermerkt, für gleiche und gleichwirkende Elemente gleiche Bezugszeichen verwendet.

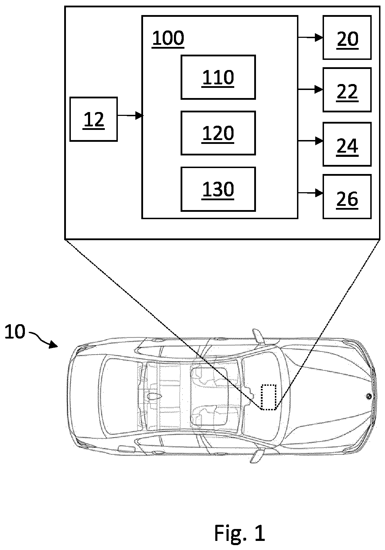

Figur 1 zeigt schematisch ein Fahrzeug 10 mit einem Fahrassistenzsystem 100 zum automatisierten Fahren gemäß Ausführungsformen der vorliegenden Erfindung.

Das Fahrzeug 10 umfasst das Fahrassistenzsystem 100 zum automatisierten Fahren. Beim automatisierten Fahren erfolgt die Längs- und/oder Querführung des Fahrzeugs 10 automatisch. Das Fahrassistenzsystem 100 übernimmt also die Fahrzeugführung. Hierzu steuert das Fahrassistenzsystem 100 den Antrieb 20, das Getriebe 22, die hydraulische Betriebsbremse 24 und die Lenkung 26 über nicht dargestellte Zwischeneinheiten.

Zur Planung und Durchführung des automatisierten Fahrens werden Umfeldinformationen einer Umfeldsensorik, die das Fahrzeugumfeld beobachtet, vom Fahrassistenzsystem 100 entgegengenommen. Insbesondere kann das Fahrzeug wenigstens einen Umgebungssensor 12 umfassen, der zur Aufnahme von Umgebungsdaten, die das Fahrzeugumfeld angeben, eingerichtet ist. Der wenigstens eine Umgebungssensor 12 kann beispielsweise ein oder mehrere LiDAR-Systeme, ein oder mehrere Radar-Systeme, eine oder mehrere Kameras und/oder einen oder mehrere Laserscanner umfassen.

Das Fahrassistenzsystem 100 umfasst ein Fahrassistenzmodul 110, das zum automatisierten Fahren mit einem ersten Automatisierungsgrad und zum automatisierten Fahren mit einem zweiten Automatisierungsgrad eingerichtet ist, wobei der zweite Automatisierungsgrad höher als der erste Automatisierungsgrad ist; ein Ausgabemodul 120, das zum Ausgeben einer Fahreranweisung eingerichtet ist, wenn während des automatisierten Fahrens mit dem ersten Automatisierungsgrad eine vorgegebene Fahrerhandlung für eine erste Zeitspanne ausbleibt; und eine Benutzereingabemodul 130, das zum Empfangen einer Benutzereingabe zum Umschalten vom ersten Automatisierungsgrad auf den zweiten Automatisierungsgrad eingerichtet ist. Das Ausgabemodul 120 ist weiter eingerichtet, um die Fahreranweisung auszugeben, wenn die folgenden Bedingungen vorliegen:
(i) das Fahrassistenzsystem bestimmt, dass die vorgegebene Fahrerhandlung für eine zweite Zeitspanne ausbleibt, die kürzer als die erste Zeitspanne ist,
(ii) die Benutzereingabe zum Umschalten vom ersten Automatisierungsgrad auf den zweiten Automatisierungsgrad wird empfangen, und
(iii) ein Umschalten vom ersten Automatisierungsgrad auf den zweiten Automatisierungsgrad ist erfolglos.

Das Fahrassistenzsystem 100 kann ein aktiver Spurhalteassistent sein, der den Fahrer bei einer Querführung des Fahrzeugs unterstützt. Die vorliegende Erfindung ist jedoch nicht hierauf begrenzt und andere Fahrassistenzsysteme, die zwischen wenigstens zwei Automatisierungsgraden umschaltbar sind, sind denkbar.

Wenn der Fahrer von einem niedrigen Automatisierungsgrad zu einem höheren Automatisierungsgrad wechseln möchte und der Wechsel nicht durchgeführt werden kann, beispielsweise da eine Zuverlässigkeit von Sensordaten zur Erkennung einer Fahrspur nicht hinreichend ist, wird eine Fahreranweisung schneller ausgegeben als dies normalerweise beim niedrigen Automatisierungsgrad der Fall ist. Dadurch kann sichergestellt werden, dass der Fahrer die erfolglose Aktivierung des höheren Automatisierungsgrads schnell zur Kenntnis nimmt und entsprechend handelt.

Die Fahreranweisung kann zum Beispiel ein Hands-on Request oder ein Take-over Request sein, der optisch und/oder akustisch und/oder haptisch an den Fahrer ausgegeben wird.

In einigen Ausführungsformen kann das Ausgabemodul 120 wenigstens eine Anzeigevorrichtung umfassen, die eingerichtet ist, um die Fahreranweisung optisch auszugeben bzw. anzuzeigen. Die Anzeigevorrichtung kann zum Beispiel im oder am Armaturenbrett des Fahrzeugs vorgesehen sein. Die Anzeigevorrichtung kann zum Beispiel eine Headunit sein. In einigen Ausführungsformen umfasst die Anzeigevorrichtung ein LCD-Display, ein Plasma-Display oder ein OLED-Display. Ergänzend oder alternativ kann das Ausgabemodul 120 wenigstens einen Lautsprecher umfassen, der eingerichtet ist, um die Fahreranweisung akustisch auszugeben. Ergänzend oder alternativ kann das Ausgabemodul 120 eingerichtet sein, um die Fahranweisung haptisch zum Beispiel durch eine Vibration des Lenkrads auszugeben bzw. anzuzeigen.

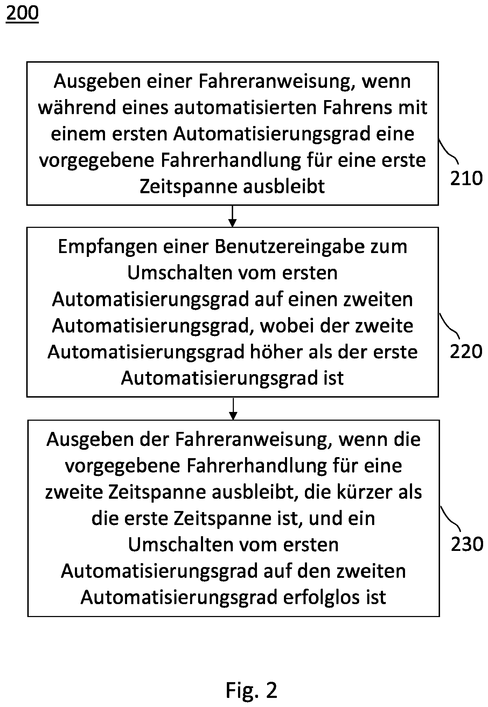

Figur 2 zeigt schematisch ein Flussdiagramm eines Fahrassistenzverfahrens 200 zum automatisierten Fahren eines Fahrzeugs gemäß Ausführungsformen der vorliegenden Erfindung. Das Fahrassistenzverfahren 200 kann durch eine entsprechende Software implementiert werden, die durch einen oder mehrere Prozessoren (z.B. eine CPU) ausführbar ist.

Das Fahrassistenzverfahren 200 umfasst im Block 210 ein Ausgeben einer Fahreranweisung, wenn während eines automatisierten Fahrens mit einem ersten Automatisierungsgrad eine vorgegebene Fahrerhandlung für eine erste Zeitspanne ausbleibt; im Block 220 ein Empfangen einer Benutzereingabe zum Umschalten vom ersten Automatisierungsgrad auf einen zweiten Automatisierungsgrad, wobei der zweite Automatisierungsgrad höher als der erste Automatisierungsgrad ist; und im Block 230 ein Ausgeben der Fahreranweisung, wenn:
(i) die vorgegebene Fahrerhandlung für eine zweite Zeitspanne ausbleibt, die kürzer als die erste Zeitspanne ist, und
(ii) ein Umschalten vom ersten Automatisierungsgrad auf den zweiten Automatisierungsgrad erfolglos ist.

Erfindungsgemäß wird bei einem Wechsel von einem niedrigeren Automatisierungsgrad zu einem höheren Automatisierungsgrad die Zeitspanne bis zur Ausgabe der Fahreranweisung, wie zum Beispiel eines Hands-on Requests, verkürzt. Wenn der Fahrer bei einem erfolglosen Aktivierungsversuch des höheren Automatisierungsgrads die Hände vom Lenkrad nimmt, erfolgt die entsprechende Fahreranweisung also schneller als normalerweise. Dadurch kann sichergestellt werden, dass der Fahrer die erfolglose Aktivierung des höheren Automatisierungsgrads schnell zur Kenntnis nimmt und entsprechend handelt. Hierdurch können gefährliche Situationen aufgrund einer fehlerhaften Annahme einer aktivierten Fahrassistenzfunktion vermieden werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

## Patentansprüche

1. Fahrassistenzsystem (100) zum automatisierten Fahren eines Fahrzeugs (10), umfassend:
ein Fahrassistenzmodul (110), das zum automatisierten Fahren mit einem ersten Automatisierungsgrad und zum automatisierten Fahren mit einem zweiten Automatisierungsgrad eingerichtet ist, wobei der zweite Automatisierungsgrad höher als der erste Automatisierungsgrad ist;
ein Ausgabemodul (120), das zum Ausgeben einer Fahreranweisung eingerichtet ist, wenn während des automatisierten Fahrens mit dem ersten Automatisierungsgrad eine vorgegebene Fahrerhandlung für eine erste Zeitspanne ausbleibt; und
eine Benutzereingabemodul (130), das zum Empfangen einer Benutzereingabe zum Umschalten vom ersten Automatisierungsgrad auf den zweiten Automatisierungsgrad eingerichtet ist, wobei das Ausgabemodul (120) weiter eingerichtet ist, um die Fahreranweisung auszugeben, wenn:
(i) das Fahrassistenzsystem bestimmt, dass die vorgegebene Fahrerhandlung für eine zweite Zeitspanne ausbleibt, die kürzer als die erste Zeitspanne ist,
(ii) die Benutzereingabe zum Umschalten vom ersten Automatisierungsgrad auf den zweiten Automatisierungsgrad empfangen wird, und
(iii) ein Umschalten vom ersten Automatisierungsgrad auf den zweiten Automatisierungsgrad erfolglos ist.

2. Das Fahrassistenzsystem (100) nach Anspruch 1, wobei das Fahrassistenzsystem (100) ein Spurhalteassistent ist.

3. Das Fahrassistenzsystem (100) nach Anspruch 1 oder 2, wobei die vorgegebene Fahrerhandlung ein Halten eines Lenkrads durch den Fahrer ist.

4. Das Fahrassistenzsystem (100) nach einem der Ansprüche 1 bis 3, wobei die Fahreranweisung ein Hands-on Request oder ein Take-over Request ist.

5. Das Fahrassistenzsystem (100) nach einem der Ansprüche 1 bis 4, wobei das Ausgabemodul (120) eingerichtet ist, um die Fahreranweisung optisch und/oder akustisch und/oder haptisch auszugeben.

6. Das Fahrassistenzsystem (100) nach einem der Ansprüche 1 bis 5, wobei die erste Zeitspanne 5 Sekunden oder mehr ist, insbesondere wobei die erste Zeitspanne im Bereich zwischen 5 und 15 Sekunden ist, und/oder wobei die zweite Zeitspanne 4 Sekunden oder weniger ist, insbesondere wobei die zweite Zeitspanne 1 Sekunde ist.

7. Das Fahrassistenzsystem (100) nach einem der Ansprüche 1 bis 6, wobei der erste Automatisierungsgrad SAE-Level 2 entspricht, und wobei der zweite Automatisierungsgrad SAE-Level 3 entspricht.

8. Fahrzeug (10), insbesondere Kraftfahrzeug, umfassend das Fahrassistenzsystem (100) nach einem der Ansprüche 1 bis 7.

9. Fahrassistenzverfahren (200) zum automatisierten Fahren eines Fahrzeugs, umfassend:
Ausgeben (210) einer Fahreranweisung, wenn während eines automatisierten Fahrens mit einem ersten Automatisierungsgrad eine vorgegebene Fahrerhandlung für eine erste Zeitspanne ausbleibt;
Empfangen (220) einer Benutzereingabe zum Umschalten vom ersten Automatisierungsgrad auf einen zweiten Automatisierungsgrad wobei der zweite Automatisierungsgrad höher als der erste Automatisierungsgrad ist; und
Ausgeben (230) der Fahreranweisung, wenn:
(i) die vorgegebene Fahrerhandlung für eine zweite Zeitspanne ausbleibt, die kürzer als die erste Zeitspanne ist, und
(ii) ein Umschalten vom ersten Automatisierungsgrad auf den zweiten Automatisierungsgrad erfolglos ist.

10. Speichermedium, umfassend ein Software-Programm, das eingerichtet ist, um auf einem oder mehreren Prozessoren ausgeführt zu werden, und um dadurch das Fahrassistenzverfahren (200) gemäß Anspruch 9 auszuführen.

## Claims

1. Driving assistance system (100) for the automated driving of a vehicle (10), comprising:
a driving assistance module (110), which is configured for automated driving with a first degree of automation and for automated driving with a second degree of automation, wherein the second degree of automation is higher than the first degree of automation;
an output module (120), which is configured to output a driver instruction when a specified driver action is absent for a first time period during automated driving with the first degree of automation; and
a user input module (130), which is configured to receive a user input for a switchover from the first degree of automation to the second degree of automation, wherein the output module (120) is further configured to output the driver instruction, in the event that:
(i) the driving assistance system determines that the specified driver action is absent for a second time period which is shorter than the first time period;
(ii) the user input for a switchover from the first degree of automation to the second degree of automation is received; and
(iii) a switchover from the first degree of automation to the second degree of automation is unsuccessful.

2. Driving assistance system (100) according to Claim **1,** wherein the driving assistance system (100) is a lane departure warning system.

3. Driving assistance system (100) according to Claim 1 or 2, wherein the specified driver action is the holding of the steering wheel by the driver.

4. Driving assistance system (100) according to one of Claims 1 to 3, wherein the driver instruction is a hands-on request or a take-over request.

5. Driving assistance system (100) according to one of Claims 1 to 4, wherein the output module (120) is designed for outputting an optical and/or acoustic and/or haptic driver instruction.

6. Driving assistance system (100) according to one of Claims 1 to 5, wherein the first time period is 5 seconds or more, in particular wherein the first time period lies within a range of 5 to 15 seconds, and/or wherein the second time period is 4 seconds or fewer, in particular wherein the second time period is 1 second.

7. Driving assistance system (100) according to one of Claims 1 to 6, wherein the first degree of automation corresponds to SAE Level 2, and wherein the second degree of automation corresponds to SAE Level 3.

8. Vehicle (10), in particular motor vehicle, comprising the driving assistance system (100) according to one of Claims 1 to 7.

9. Driving assistance method (200) for the automated driving of a vehicle, comprising:
an output (210) of a driver instruction when a specified driver action is absent for a first time period during automated driving with a first degree of automation;
reception (220) of a user input for a switchover from the first degree of automation to a second degree of automation, wherein the second degree of automation is higher than the first degree of automation; and
outputting (230) of the driver instruction, in the event that:
(i) the specified driver action is absent for a second time period which is shorter than the first time period; and
(ii) a switchover from the first degree of automation to the second degree of automation is unsuccessful.

10. Storage medium, comprising a software program which is designed to be run on one or more processors, in order to execute the driving assistance method (200) according to Claim 9.

## Revendications

1. Système d'aide à la conduite (100) pour la conduite automatisée d'un véhicule (10), comprenant :
un module d'aide à la conduite (110) qui est conçu pour la conduite automatisée avec un premier degré d'automatisation et pour la conduite automatisée avec un deuxième degré d'automatisation, le deuxième degré d'automatisation étant supérieur au premier degré d'automatisation ;
un module de sortie (120) qui est conçu pour émettre une instruction au conducteur en l'absence d'une action prédéfinie du conducteur pendant une première période de temps pendant la conduite automatisée avec le premier degré d'automatisation ; et
un module d'entrée utilisateur (130) qui est conçu pour recevoir une entrée utilisateur pour commuter du premier degré d'automatisation au deuxième degré d'automatisation, le module de sortie (120) étant en outre conçu pour émettre l'instruction au conducteur si :
(i) le système d'aide à la conduite détermine l'absence de l'action prédéfinie du conducteur pendant une deuxième période de temps qui est plus courte que la première période de temps,
(ii) l'entrée utilisateur pour commuter du premier degré d'automatisation au deuxième degré d'automatisation est reçue, et
(iii) une commutation du premier degré d'automatisation au deuxième degré d'automatisation échoue.

2. Système d'aide à la conduite (100) selon la revendication 1, dans lequel le système d'aide à la conduite (100) est un système d'aide au maintien dans la voie.

3. Système d'aide à la conduite (100) selon la revendication 1 ou 2, dans lequel l'action prédéfinie du conducteur est le fait que le conducteur tient un volant.

4. Système d'aide à la conduite (100) selon l'une quelconque des revendications 1 à 3, dans lequel l'instruction au conducteur est une demande de poser les mains sur le volant ou une demande de prise en charge.

5. Système d'aide à la conduite (100) selon l'une quelconque des revendications 1 à 4, dans lequel le module de sortie (120) est conçu pour émettre l'instruction au conducteur de manière optique et/ou acoustique et/ou haptique.

6. Système d'aide à la conduite (100) selon l'une quelconque des revendications 1 à 5, dans lequel la première période de temps dure 5 secondes ou plus, en particulier dans lequel la première période de temps est comprise dans la plage entre 5 et 15 secondes, et/ou dans lequel la deuxième période de temps dure 4 secondes ou moins, en particulier dans lequel la deuxième période de temps dure 1 seconde.

7. Système d'aide à la conduite (100) selon l'une quelconque des revendications 1 à 6, dans lequel le premier degré d'automatisation correspond à SAE niveau 2, et dans lequel le deuxième degré d'automatisation correspond à SAE niveau 3.

8. Véhicule (10), en particulier véhicule automobile, comprenant le système d'aide à la conduite (100) selon l'une quelconque des revendications 1 à 7.

9. Procédé d'aide à la conduite (200) pour la conduite automatisée d'un véhicule, comprenant les étapes consistant à :
émettre (210) une instruction au conducteur en l'absence d'une action du conducteur prédéfinie pendant une première période de temps pendant une conduite automatisée avec un premier degré d'automatisation ;
recevoir (220) une entrée utilisateur pour commuter du premier degré d'automatisation à un deuxième degré d'automatisation, le deuxième degré d'automatisation étant supérieur au premier degré d'automatisation ; et
émettre (230) l'instruction au conducteur si :
(i) l'action prédéfinie du conducteur est absente pendant une deuxième période de temps qui est plus courte que la première période de temps, et
(ii) une commutation du premier degré d'automatisation au deuxième degré d'automatisation échoue.

10. Support de stockage, comprenant un programme informatique qui est conçu pour être exécuté sur un ou plusieurs processeurs et pour exécuter de ce fait le procédé d'aide à la conduite (200) selon la revendication 9.
